# EUROPEAN PATENT APPLICATION

(11) **EP 4 657 295 A1**
(43) Date of publication of application: **03.12.2025**
(21) Application number: 24178860.3
(22) Date of filing: 29.05.2024
(51) Int. Cl.: G06F 21/60, G06F 21/62, G06F 21/64, H04L 9/32, H04L 9/40, G06F 21/10

(54) **COMPUTER-IMPLEMENTED METHOD FOR PROVIDING VERIFIABLE SELECTIVE DISCLOSURE OF DATA WITH DATA-USAGE CONTROL**

(71) Applicant: Siemens Aktiengesellschaft, 80333 München (DE)
(72) Inventor: Wimmer, Martin, 85579 Neubiberg (DE)
(74) Representative: Siemens Patent Attorneys

(57) **Abstract**

Computer-implemented method for providing a verifiable selective disclosure with data-usage control of data (RawD) comprising at least one restricted data portion (RD), comprising the steps of
- providing (S1), by a data owner unit (21, 62), a verifiable representation (VR) of data comprising a sealed version (sRD) of the at least one restricted data portion (RD), for access to restricted data to a recipient unit (22, 63),
- requesting (S2), by the recipient unit (22, 63), access and a proof for the restricted data portion (RD), from the data owner unit (21, 62),
- providing (S3), by the data owner unit (21, 62), a dis-closure information (DI) comprising the sealed version of the restricted data portion (sRD) and the proof to the recipient unit (22, 63), the proof being encrypted by a content key (CDEK),
- providing (S4), by the recipient unit (22, 63), information on an execution environment of the recipient unit (22, 63) to an access management unit (23, 61) and requesting the content key (CDEK) for the proof from the access management unit (23, 61),
- sending (S5), by the access management unit (23, 61), the content key (CDEK) to the recipient unit (22, 63) if the recipient unit (22, 63) and the provided information on the execution environment complies with at least one data-usage condition of an access policy (AP) for the sealed restricted data portion (sRD), and
- receiving (S6) access to the restricted data portion (RD) by decrypting, the proof of the disclosure information (DI) with the content key (CDEK) a by the recipient unit (22, 63), and
- verifying (S7) the restricted data portion (RD) with the proof, by the recipient unit (22, 63), wherein the data-usage conditions are configured such that a transfer of the proof to another recipient unit is prevented.

## Description

*Independent of the grammatical term usage, individuals with male, female or other gender identities are included within the term.*

### Technical Field

The present invention relates to a system and a computer-implemented method for providing verifiable selective disclosure with data-usage control of data comprising at least one restricted data portion, an access control system and an access control unit configured to perform at least a subset of the steps of the computer-implemented method.

### Background Art

In many cross-organizational processes sensitive data needs to be shared between partners. For instance, in supply chain processes some information about products, e.g., in which country it was produced, the exclusion of child labor, the product carbon footprint, should be accessible to partners of the supply chain or even to the public. Furthermore, the information needs to be verifiable, i.e., authenticity of source of the data and integrity of the data itself should be ensured. However, proprietary information such as details about a company's suppliers and sub-suppliers shall by default not be shared. Only to selected partners and/or under certain circumstances, e.g., dispute resolution that demands for the disclosure of information in legal proceedings, this information shall be revealed to provide evidence.

In case the information has to be disclosed, the challenge arises how to control access to and usage of this information after disclosure. The information is provided in electronic form thus it would be easy to copy and transmit it to many recipients, i.e., also unauthorized ones. For instance, a supplier S1 discloses information about one of its sub-suppliers S2 to a manufacturer M. Once, details about S2 are disclosed to M, S1 cannot be sure that M shares this information also with other organizations and/or misuses it for different purposes.

As mentioned above, in many use cases information needs to be verifiable. I.e., the recipient of an information needs to be able to verify / evaluate the trustworthiness of the disclosed information.

When information gets disclosed, such as the identity of S2, dissemination of this information to other parties by M cannot be prevented, per se. However, the information alone is gossip as long as the information is not verifiable by the unauthorized recipient of the information. To disseminate verifiable data, M would be required to not only disseminate the disclosed information (identity of S2) but additional proofs of origin and validity.

### Summary of Invention

Therefore, it is one object of the present application to provide a method which prevents unauthorized use and dissemination of verifiable information. Especially, it is an object to prevent at least a transfer of a proof to verify the information. Another object is to provide a cost-efficient solution, especially costs for certificates/credentials issued for the verifiable information.

The objective is solved by the features of the independent claims. The dependent claims contain further developments of the invention.

A first aspect of the invention concerns a computer-implemented method for providing verifiable selective disclosure with data-usage control of data comprising at least one restricted data portion, comprising the steps of
- providing, by a data owner unit, a verifiable representation of data comprising a sealed version of the at least one restricted data portion, for access to restricted data to a recipient unit,
- requesting, by the recipient unit, access and a proof for the restricted data portion, from the data owner unit,
- providing, by the data owner unit, a disclosure information comprising the sealed version of the restricted data portion and the proof to the recipient unit, the proof being encrypted by a content key,
- providing, by the recipient unit, information on an execution environment of the recipient unit to an access management unit and requesting the content key for the proof from the access management unit,
- sending, by the access management unit, the content key to the recipient unit if the recipient unit and the provided information on the execution environment complies with at least one data-usage condition of an access policy for the sealed restricted data portion, and
- receiving access to the restricted data portion by decrypting, the proof of the disclosure information with the content key by the recipient unit, and
- verifying the restricted data portion with the proof, by the recipient unit,
wherein the data-usage conditions are configured and enforced such that a transfer of the proof to another recipient unit is prevented.

A second aspect concerns an access control system for providing verifiable selective disclosure with data-usage control of data comprising at least one restricted data portion comprising at least a data owner unit, a recipient unit and an access management unit configured to perform the method steps of the above-mentioned computer-implemented method.

A third aspect concerns an access management unit for providing a verifiable selective disclosure with data-usage control of data comprising at least one restricted data portion, the access management unit comprising at least one processor configured to perform the steps:
- receiving, from a recipient unit, information on an execution environment of the recipient unit and a request for sending a content key for a proof, and
- sending the content key to the recipient unit if the information on the received execution environment complies to at least one data-usage condition of an access policy for a sealed restricted data portion, wherein the data-usage conditions of the access policy are configured and enforced such that a transfer of the proof value to another recipient unit is prevented.

A fourth aspect concerns a computer program product directly loadable into the internal memory of at least on one digital computer, comprising software code portions for performing the steps of the method when said product is run on said at least one digital computer.

The proposed method limits the access to the verifiable restricted data portion to those recipient units complying with the access policy, e.g., the execution environment of the recipient unit has to comply to the access policy. If the recipient unit has received access to the restricted data and forwards the restricted information to a third party, this party cannot verify the restricted data portion as the execution environment of the recipient unit complies to the access policy and therefore restricts the transfer. Thus, this restricted data is only "gossip" and not verifiable at all for the third party.

### Description of Embodiments

Independent of the grammatical term usage, individuals with male, female or other gender identities are included within the term.

In the further description requesting, providing, sending is to be understood by sending a request message or a response message, which includes information to convey it from the source of the message to the sink of the message.

In a preferable embodiment the access policy comprises the at least one data-usage condition and the content key. The access policy is registered by the data owner unit at the access management unit.

This allows the data owner to flexibly define the access policy by himself and to register it at the access management unit on demand.

In a preferred embodiment the proof comprises a proof value and the restricted data portion. The restricted data portion is verified, if the sealed restricted data portion complies with a result of a cryptographic algorithm specified in the verifiable representation performed with a proof value of the proof and the restricted data portion as input.

In a preferred embodiment the disclosure information and/or the access policy is cryptographically signed by the data owner unit.

This allows to check authenticity and integrity of the disclosure information and/or the access policy.

In a preferred embodiment the data-usage condition specifies recipient units allowed to access the restricted data portion and at least one capability of the execution environment of the recipient unit which has to be met to receive the content key.

As a result, a data owner via the data owner unit can specify the access policy in a flexible way with respect to recipients allowed to verify and access the restricted data and the requested data-usage conditions which have to be fulfilled by the allowed recipient units.

In a preferred embodiment the request of the recipient unit for the content key comprises an attestation of capabilities of the execution environment of the recipient unit and the access management unit verifies the compliance of the data-usage condition with the attested capabilities of the execution environment of the recipient unit.

The attestation is issued by a trustworthy unit and allows a verification of the provided capabilitiesof the execution environment.

In a preferred embodiment the attestation of capabilities concerns Hardware components and/or Software components of the execution environment.

Thus, a wide range of components of the execution environment can be covered and ruled by the access policy.

In a preferred embodiment the data owner unit requests from a certifier unit a verifiable representation for data comprising restricted and/or unrestricted data portions, and the certifier unit provides the verifiable representation comprising the unrestricted data portions and the sealed restricted data portion for each of the restricted data portions.

Such a verifiable representation and the information contained can be trusted as the certifier unit is a trusted party.

Unless indicated otherwise in the description below, the terms "provide", "receive", "request", "send", "decrypt", and the like preferably relate to actions and/or processes and/or processing steps that alter and/or produce data and/or that convert data into other data, the data being able to be presented or available as physical variables, in particular, for example as electrical impulses. In particular, the expression "computer" should be interpreted as broadly as possible in order to cover in particular all electronic devices having data processing properties.

Computers can therefore be for example personal computers, servers, programmable logic controllers (PLCs), handheld computer systems, Pocket PC devices, mobile radios and other communication devices that can process data in computer-aided fashion, processors and other electronic devices for data processing.

### Brief Description of the Drawing

- Fig.1: schematically illustrates main players in an information disclosure environment exchanging verifiable representation created for data comprising restricted and unrestricted data portions.
- Fig.2: illustrates a first embodiment of the inventive computer-implemented method as a flow diagram.
- Fig.3: illustrates a second embodiment of the inventive computer-implemented method as a message flowchart.
- Fig.4: schematically shows an embodiment of a disclosure information and an access policy data structure.
- Fig.5: schematically shows an embodiment of the inventive access management system including an embodiment of the inventive access management unit.

### Description of Examples

The invention will be explained in more detail by reference to the accompanying figures.

Equivalent parts in the different figures are labeled with the same reference signs.

It is noted that in the following detailed description of embodiments, the accompanying drawings are only schematic, and the illustrated elements are not necessarily shown to scale. Rather, the drawings are intended to illustrate functions and the co-operation of components. Here, it is to be understood that any connection or coupling of functional blocks, devices, components or other physical or functional units could also be implemented by an indirect connection or coupling, e.g., via one or more intermediate elements. A connection or a coupling of elements or components or nodes can for example be implemented by a wire-based, a wireless connection and/or a combination of a wire-based and a wireless connection. Functional units can be implemented by dedicated hardware, e.g., processor, firmware or by software, and/or by a combination of dedicated hardware and firmware and software. It is further noted that each functional unit described for an apparatus can perform a functional step of the related method.

In the same way, each functional step described for a method can be performed in a functional unit of the related apparatus.

XML Signatures, specified by W3C in "XML Signature Syntax and Processing Version 1.1" or Verifiable Credentials (VC), specified by W3C in "Verifiable Credentials Data Model v1.1" are known to address verifiability of information, protocols and data structures.

Verifiability denotes ensuring data integrity and authenticity, i.e., being able to prevent and/or at least being able to identify data manipulation, and non-repudiation, i.e., being able to identify the source of information. This can be achieved by signing information, making use of, e.g., Private Key Infrastructure (PKI) technology where an issuer of data signs the data using its private key. Verifiers can verify it, using the public key of the issuer and by that validate that data was provided by the trusted source, i.e., the issuer and has not been modified. Using, e.g., an X.509 certificate, the public key can be associated with a person or legal entity. Verifiable Credentials introduce the three roles of Issuers, Holders, and Verifiers. In this context, Issuers issue verifiable credentials VC and provide the VC to Holders. The which those in turn can use to provide proof to Verifiers.

Selective Disclosure can for instance be addressed by Selective Disclosure for JSON Web Token (SD-JWT) which is currently available as IETF draft for standardization, see https://datatracker.ietf.org/doc/draft-ietf-oauth-selective-disclosure-jwt/. An SD-JWT, at its core, is a digitally signed JSON document containing digests over the selectively disclosable information with the Disclosures outside the document. Each digest value ensures the integrity of, and maps to, the respective disclosure. Digest values are calculated using a function, preferably a hash function over the Disclosures, each of which contains a cryptographically secure random salt, the information name (only when the information is an object property), and the information value. The Disclosures are sent to the Holder as part of the SD-JWT. When presenting an SD-JWT to a Verifier, the Holder only includes the Disclosures for the information that it wants to reveal to that Verifier. An SD-JWT MAY also contain clear-text claims that are always disclosed to the Verifier.

In the proposed method, a verifiable representation is a data structure comprising unrestricted and restricted data portions, wherein the unrestricted data portions are provided in plain text, the restricted data being modified and structured as described above for a selective disclosure-JWT.

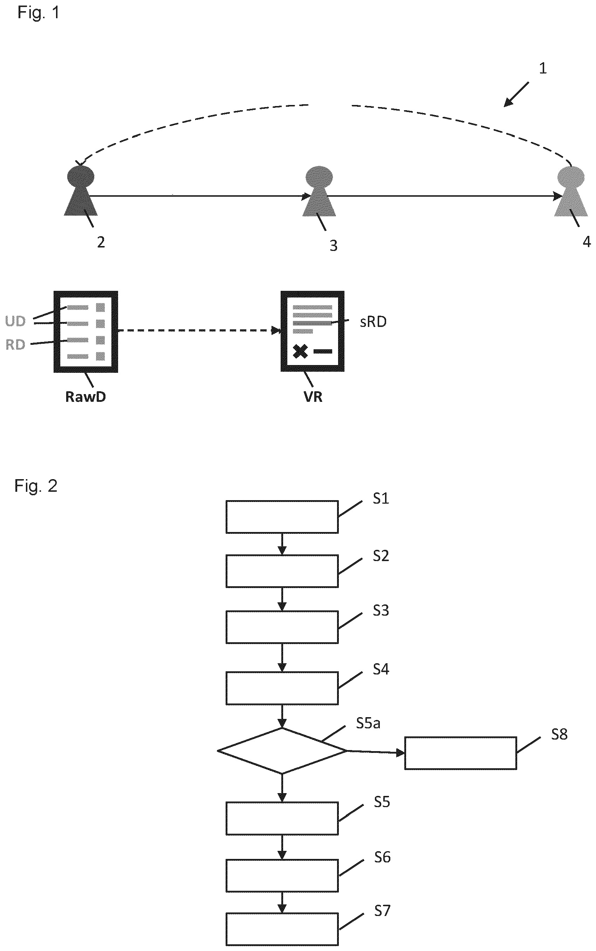

Fig.1 shows main players in an information disclosure environment 1 exchanging a data with selective disclosure. The environment 1 comprises a data owner 3 who owns the data RawD. The Data Owner acts as Holder when mapped to W3C specified Verifiable Credentials. A certifier 2 is an attestation authority evaluating the data RawD and providing attestation that RawD is valid. Mapped to W3C specified Verifiable Credentials, the Certifier acts as Issuer, issuing verifiable credentials. A recipient 4 is an entity receiving the verifiable data that also wants to get access to selectively disclosed restricted data RD. It is assumed that the recipient 4 trusts the certifier 2. Mapped to W3C specified Verifiable Credentials the recipient 4 acts as verifier.

A verifiable representation VR created for data RawD, synonymously called raw data, comprising unrestricted data portions UD that can be accessible to the public and restricted data portions RD which shall only be disclosed to selected recipients. The verifiable representation VR comprises the restricted data portions in a sealed form, called sealed version of the restricted data portion RD, or shortly sealed restricted data portion sRD.

An example of a verifiable representation VR structured as a Selective Disclosure-JSON Web Token (SD-JWT) providing information on attributes of a device, is shown below:

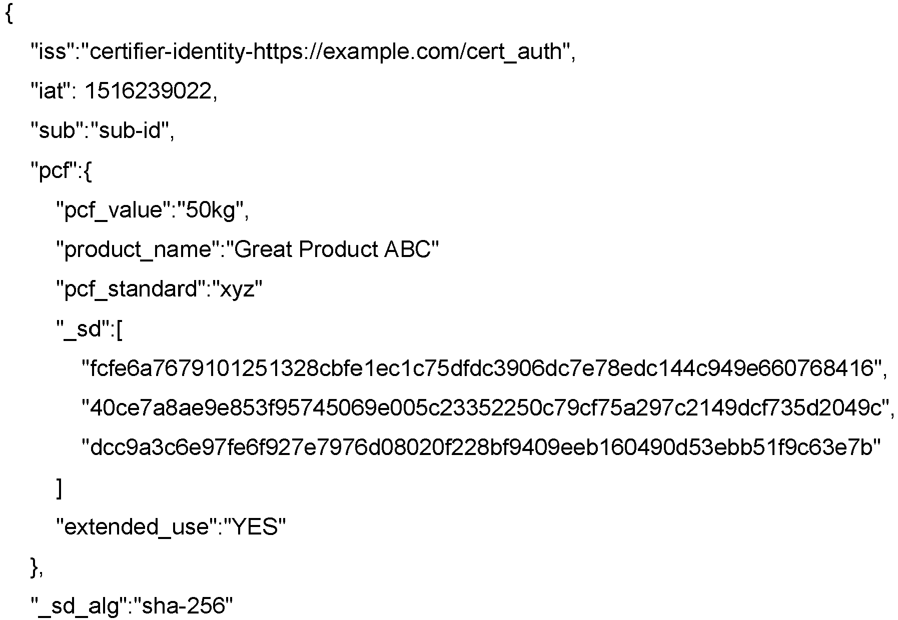

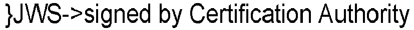

The first three lines after the expression "pcf" show unrestricted data, which can be read in plain text. The three data portions each in quotation marks under the expression "_sd" show restricted data in a sealed version sRD, which can only be accessed, i.e., read in plain text, when additional information is provided.

In case the recipient 4 needs access to the restricted data RD in plain text, he/she can reach out to data owner 3 that decides on disclosing the requested information, separately. For instance, following information is provided on restricted data RD about the integrated CPU and vendor of the CPU:
"fcfe6a7679101251328cbfe1ec1c75dfdc3906dc7e78edc144c949e660768416" ["SALT_VALUE_CHIP", "chip", "Super powerful CPU-1234"]

It includes the restricted data portion in plain text, here "chip" and "Super powerful CPU-1234". The restricted data is verified by performing a selective disclosure algorithm provided in the verifiable representation VR, i.e., "_sd_alg":"sha-256", with unrestricted data and the proof value "SALT _VALUE_CHIP" as input. If the output of the performed algorithm complies to the sealed restricted data portion sRD the restricted data portion RD is verified. As a verifiable representation is certified by the certifier 2, the recipient 4 can verify the authenticity of the restricted data portion RD.

The advantage of this approach is that the same verifiable representation VR, here in form of an SD-JWT document, can be used in multiple, repeated scenarios - hence, saving costs and time for repeated certifying of the credential by the certifier unit. However, once the data owner 3 discloses information the way described above, the recipient 4 can disseminate the information to multiple other parties without the data owner 3 being in the loop and able to control these steps. Especially, the information disseminated by the recipient 4 is verifiable, i.e., it has different quality than "just gossip". In case the data owner 3 discloses information to two or multiple recipients/OEMs, the data owner 3 would not be able to determine the source of untrust and dispute/legal actions would be hindered.

The proposed method is illustrated in Fig.2 as a flow diagram. The method allows strictly controlled access to the restricted data information, the restricted data shall be verifiable in order to be trusted. Additionally, only one verifiable representation is required to provide disclosure to several recipients. There is not a demand for individualizing verifiable representations which have to be issued for each recipient allowed to access the restricted data, i.e., as certification is considered to be costly (as done by a trusted third party), we assume that.

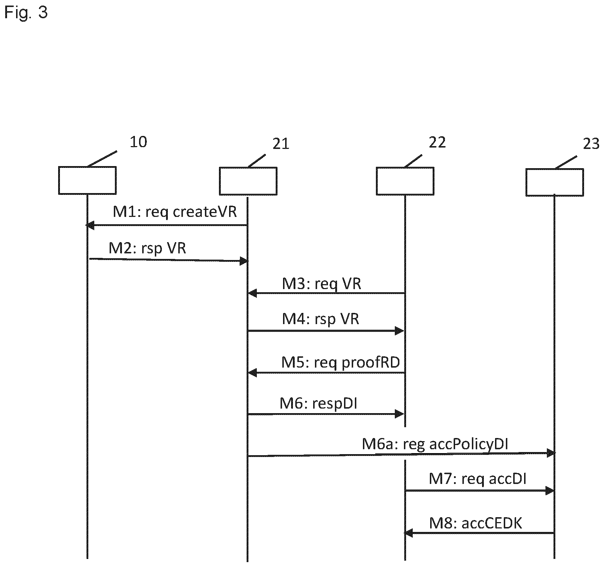

The proposed method is performed by a data owner unit 21 representing the data owner, a recipient unit 22 representing the recipient and an access management unit 23 as illustrated in Fig.3. The data owner unit 21, recipient unit 22 the recipient, and the recipient unit 22 comprise at least one processor performing the respective method steps.

The method provides a verifiable selective disclosure of data RawD comprising at least one restricted data portion RD and optionally also unrestricted data portion UD.

In a first step S1, the data owner unit 21 provides a verifiable representation VR of data RawD to a recipient unit 22. The verifiable representation VR comprises a sealed version of the at least one restricted data portion sRD, for access to restricted data RD. The verifiable representation VR is a representation of RawD that can be considered trustworthy if it has been issued by a trusted authority. The verifiable representation VR is for instance represented via SD-JWT or signed XML. Preferably, the verifiable representation VR is sent in response to a request of the recipient unit 22.

The recipient unit 22 requests access and a proof for the restricted data portion RD from the data owner unit 21, see step S2. In return, the data owner unit 21 provides a disclosure information comprising the sealed version of the restricted data portion sRD and the proof to the recipient unit 22, see S3. The proof is encrypted by a content key. Next in S4, the recipient unit 22 provides information on an execution environment of the recipient unit 22 to an access management unit 23 and requests the content key for the proof from the access management unit 23. In an embodiment the access policy is registered by the data owner unit 21 at the access management unit 23.

The access management unit 23 compares the provided information on the execution environment of the recipient unit 22 and an identity of the recipient unit 21 with an access policy, see S5a. The access policy comprises the at least one data-usage condition and the content key. If the recipient unit 21, i.e., the identity of the recipient unit 21, and the provided information on the execution environment comply with the access policy for the sealed restricted data portion sRD, the access management unit 23 sends the content key to the recipient unit 22, see S5.

In step S6, the recipient unit 22 decrypts the proof of the disclosure information with the content key and receives access to the restricted data portion RD, i.e., to the restricted data portion in plain text. The proof comprises a proof value and the restricted data portion. The recipient unit verifies the restricted data portion with the proof, see S7. The data-usage conditions providing capabilities of the execution environment of recipient units, which are allowed to access the restricted data. The data-usage conditions in the access policy are configured such that a transfer of the proof to another recipient unit is prevented. The restricted data portion is verified, if the sealed restricted data portion complies with a result of a cryptographic algorithm specified in the verifiable representation performed with a proof value of the proof and the restricted data portion as input.

If the provided information and recipient do not comply to the access policy, the content key will not be sent to the recipient unit 23 and in consequence the requested access is denied, see S8.

Fig. 3 shows an example of a selective disclosure of data, e.g., for supply chain data exchanged between manufacturer and supplier or a product.

In a typical scenario, a data owner first requests via the data owner unit 21 a trusted certifier unit 10 to review its data RawD and to create a verifiable representation VR for it, see M1. The data RawD contains both, unrestricted and restricted information. The verifiable representation VR contains the unrestricted data portion UR and a sealed version of the restricted data sRD. The verifiable credential VR is sent in response to the data owner unit 21, see M2.

Later, when the data owner interacts with partners of a supply chain it will be asked to provide proofs for product characteristics, e.g., carbon footprint certificate or certificate for compliance with social guidelines. Steps M3 and M4 in Fig.3 illustrate a common example of the recipient unit 22 representing a customer/supply chain partner requesting the verifiable representation VR from the data owner unit 21, thus acting as a recipient. By transferring the requested verifiable representation VR to the recipient unit 22, the respective recipient has access to unrestricted data UD which might be sufficient for the time being. In some cases, e.g., legal disputes and/or the Recipient being audited by authorities, the Recipient might have to get access also to the restricted data portion RD to prove trustworthiness of its supply chain. By default, the restricted data portion RD is not directly accessible. That's why the recipient via recipient unit 22 must ask the data owner unit 21 for being granted access to the restricted data portion RD by sending a request message, see M5. If the data owner might be willing to do so, the data owner unit provides a disclosure information DI, see M6, but only if restricted data portion RD is accessed/used for the mentioned purpose.

To control and restrict access to the restricted data portion RD, the access management system 23 needs to be involved. Furthermore, it demands to provide attestation of how and where the disclosure information DI is accessed and used. That is, disclosure information DI is requested to be opened in a trusted environment. Disclosure information DI is not providing access to the restricted data portion, i.e., its plain text version, but contains an encrypted version of it.

The data owner unit sends disclosure information DI to the recipient unit 22, see M6 and manages access to/usage of the disclosure information DI via the access management unit 23. DI contains the restricted data portion RD in encrypted form. At this point in time or preferably at a time before the recipient unit 22 provides the disclosure information DI to the recipient unit 23, see M6, the data owner unit 21 registers the access policy and disclosure information at the access management unit 23, see M6a.

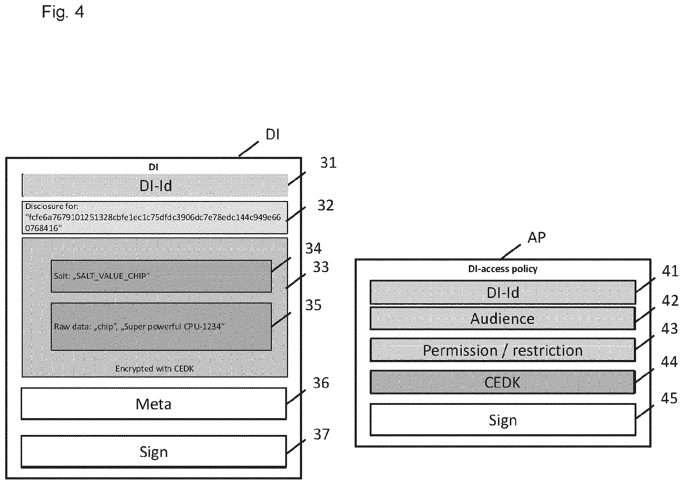

The data structures of the disclosure information DI and the data structure of the access policy AP are illustrated in Fig.4.

The disclosure information DI contains several information elements. One information element of the disclosure information DI is a DI identifier 31 which uniquely identifies the respective disclosure information DI. The disclosure information DI contains the sealed restricted data portion sRD, 32, and the proof 33. The proof contains the proof value 34 comprising of a Salt 34 and the restricted data portion RD, 35. The proof 33 is encrypted by the content key CEDK. Optionally, the disclosure information DI comprises metadata 36 such a recipient/audience, timestamp, and furthermore. The disclosure information DI contains a cryptographical signature 37 covering all information elements of the disclosure information DI. The signature 37 is generated with the private key of the data owner unit 21.

The access policy AP contains following information elements: the digital information's DI identifier 41 which is the same as the DI identifier 31 of the disclosure information DI. It further includes at least one data-usage condition, here a list of allowed recipients 42 and conditions 43 which have to be fulfilled by the execution environment of the allowed recipient units. The access policy AP further contains the content key CEDK, which can be used to decrypt the encrypted proof 33 of the disclosure information. The access policy AP contains a cryptographical signature 45 covering all information elements of the access policy AP. The signature 45 is generated with the private key of the data owner unit 21.

As shown in Fig. 3, step M7, the recipient unit 22 requests for a shared secret, i.e., the content key CEDK to decrypt the disclosure information DI. The request of the recipient unit 22 for the content key CEDK comprises capabilities of the execution environment of the recipient unit, preferably an attestation of the capabilities. The attestation of capabilities concerns Hardware components and/or Software components of the execution environment. The access management unit verifies the compliance of the data-usage condition with the attested permissions and/or restrictions of the execution environment of the recipient unit. In this step M7, policy enforcement and decision take place at the access management unit 23.

The access management unit 23 enforces the access control policy AP registered by the data owner unit 21 and triggers authentication of the recipient unit 22 and enforcing an evaluation of the user-data conditions, i.e., the capabilities of the recipient unit 22. In an advantageous embodiment, Zero Trust policy enforcement including a context of the recipient and the recipient unit 22 is in place. That way, not only the recipient gets authenticated but also the Recipient unit, i.e., Hardware and Software used to access the restricted data portion RD gets evaluated. This is a common practice/prerequisite used for Digital Rights Management (DRM) to ensure that restricted data RD is accessed in a trusted environment, only.

If permitted, the content key CEDK Recipient is transferred to the recipient unit 22, which can use the content key CEDK to decrypt the encrypted content/body of the disclosure information DI. Finally, the recipient unit has access to the proof value 34, restricted data portion RD, see the example verifiable representation and disclosure information DI in Fig.4 described above:
- Salt ("SALT_VALUE_CHIP")
- RD ("Super powerful CPU-1234")
- VR (e.g., SD-JWT document/token shown above)

When the recipient unit 23 has received the content key CEDK in step M8, the recipient unit 23 can apply the hash algorithm specified in the verifiable representation VR and apply it to the proof value SALT and restricted data portion RD to verify the disclosure value i.e., the hash of "SALT_VALUE_CHIP"+"chip"+" Super powerful CPU-1234" should result in the sealed restricted data portion, i.e. "fcfe6a7679101251328cbfe1ec1c75dfdc3906dc7e78edc144c949e660768416".

As the verifiable representation VR has been issued by a trusted issuer, i.e., the certifier unit 10, the restricted data portion RD is trustworthy.

That way, the key objectives are fulfilled, i.e., restricted/confidential information RD can be disclosed in a trustworthy, i.e., verifiable way and its usage can be controlled, preferably via DRM-like mechanisms.

Concrete implementations of the described approach could make use of JSON or XML representation for data structures. For instance, SD-JWT or a combination of XML Signature and XML Encryption can be used to realize the credential format for the disclosure information DI. The access control unit (AC) can be realized on side of the data owner or as a separate instance/trusted party. Please note that the described procedure does not demand the disclosure information DI (including restricted data portion RD) to be provided to the access management unit 23 which would also allow to set up the access management unit 23 as a centrally managed cloud service.

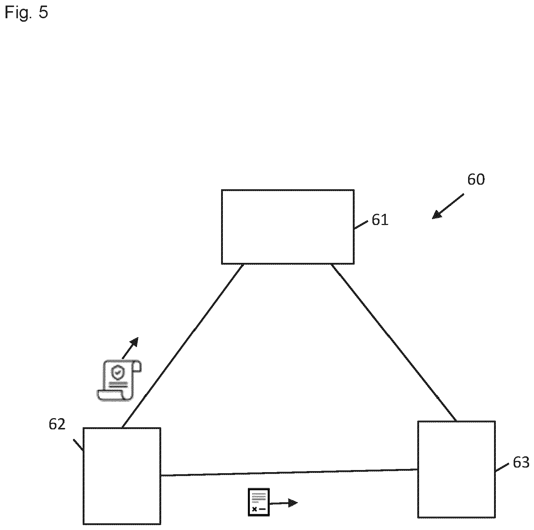

Fig.5 illustrates an embodiment of the access management system 60, comprising an embodiment of the access management unit 61, a data owner unit 62 and a recipient unit 63. The access management unit 61, a data owner unit 62 and a recipient unit 63 perform the method steps as described above and illustrated in Fig.2 and Fig.3. The data owner unit 62 registers the disclosure information and the access policy at the access management unit 61. The data owner unit 62 transmits the verifiable representation to the recipient unit 63. The access management unit 61 enforces the access policy, especially the data-usage conditions requiring specific capabilities being implemented by the recipient unit 63. Only if these conditions are met, the access management unit 61 provides the content key, which grants the recipient unit 63 access to the restricted data portion in plain text and the possibility to verify the received restricted data portion.

The access management unit 61 can either be implemented on side of the data owner or as a dedicated instance, i.e., setting up a managed DRM service infrastructure. This makes sure that the restricted data portion RD is accessible and verifiable in a controlled environment, only. Once the recipient unit has read access to the restricted data portion RD, it can per-se not be prevented from spreading this information further, i.e., the Recipient telling the RD "chip= Super powerful CPU-1234" to any other unauthorized party. However, the additional objective that it cannot do so in a verifiable way as in an advantageous embodiment it does not have read access to the proof value, assuming that the trusted recipient unit 62 is realized in a way to perform the validation and display RD but not the proof value.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Computer-implemented method for providing a verifiable selective disclosure with data-usage control of data (RawD) comprising at least one restricted data portion (RD), comprising the steps of
- providing (S1), by a data owner unit (21, 62), a verifiable representation (VR) of data comprising a sealed version (sRD) of the at least one restricted data portion (RD), for access to restricted data to a recipient unit (22, 63),
- requesting (S2), by the recipient unit (22, 63), access and a proof for the restricted data portion (RD), from the data owner unit (21, 62),
- providing (S3), by the data owner unit (21, 62), a disclosure information (DI) comprising the sealed version of the restricted data portion (sRD) and the proof to the recipient unit (22, 63), the proof being encrypted by a content key (CDEK),
- providing (S4), by the recipient unit (22, 63), information on an execution environment of the recipient unit (22, 63) to an access management unit (23, 61) and requesting the content key (CDEK) for the proof from the access management unit (23, 61),
- sending (S5), by the access management unit (23, 61), the content key (CDEK) to the recipient unit (22, 63) if the recipient unit (22, 63) and the provided information on the execution environment complies with at least one data-usage condition of an access policy (AP) for the sealed restricted data portion (sRD), and
- receiving (S6) access to the restricted data portion (RD) by decrypting, the proof of the disclosure information (DI) with the content key (CDEK) a by the recipient unit (22, 63), and
- verifying (S7) the restricted data portion (RD) with the proof, by the recipient unit (22, 63), wherein the data-usage conditions are configured and enforced such that a transfer of the proof to another recipient unit is prevented.

2. Computer-implemented method according to claim 1, wherein the access policy (AP) comprises the at least one data-usage condition and the content key (CDEK).

3. Computer-implemented method according to claim 2, wherein the access policy (AP) is registered by the data owner unit (21, 62) at the access management unit (23, 61).

4. Computer-implemented method according to any of the preceding claims, wherein the proof comprises a proof value and the restricted data portion (RD).

5. Computer-implemented method according to claims 4, wherein the restricted data portion (RD) is verified, if the sealed restricted data portion (sRD) complies with a result of a cryptographic algorithm specified in the verifiable representation (VR) performed with a proof value of the proof and the restricted data portion (RD) as input.

6. Computer-implemented method according to any of the preceding claims, wherein the disclosure information (DI) and/or the access policy (AP) is cryptographically signed by the data owner unit (21, 62).

7. Computer-implemented method according to any of the preceding claims, wherein the data-usage condition specifies recipient units (22, 63) allowed to access the restricted data portion (RD) and at least one capability of the execution environment of the recipient unit (22, 63) which has to be met to receive the content key (CDEK).

8. Computer-implemented method according to any of the preceding claims, wherein the request of the recipient unit (22, 63) for the content key (CDEK) comprises an attestation of the capabilities of the execution environment of the recipient unit (22, 63) and the access management unit (23, 61) verifies the compliance of the data-usage condition with the attested capabilities of the execution environment of the recipient unit (22, 63).

9. Computer-implemented method according to claim 8, wherein the attestation of capabilities concerns Hardware components and/or Software components of the execution environment of the recipient unit (22, 63).

10. Computer-implemented method according to any of the preceding claims, wherein the data owner unit (21, 62) requests from a certifier unit (10) a verifiable representation (VR) for data comprising restricted (RD) and/or unrestricted data portions (UD), and the certifier unit (10) provides the verifiable representation (VR) comprising the unrestricted data portions (UD) and the sealed restricted data portion (sRD) for each of the restricted data portions (RD).

11. Access control system (60) for providing a verifiable selective disclosure with data-usage control of data comprising at least one restricted data portion (RD) comprising at least a data owner unit (21, 62), a recipient unit (22, 63) and an access management unit (23, 61) configured to perform the method steps according to claims 1-10.

12. Access management unit (23, 61) for providing a verifiable selective disclosure with data-usage control of data comprising at least one restricted data portion (RD), the access management unit (23, 61) comprising at least one processor configured to perform the steps:
- receiving, from a recipient unit (22, 63), information on an execution environment of the recipient unit (22, 63) and a request for sending a content key (CDEK) for a proof, and
- sending the content key (CDEK) to the recipient unit (22, 63) if the information on the received execution environment complies to at least one data-usage condition of an access policy (AP) for a sealed restricted data portion (sRD), wherein the data-usage conditions of the access policy (AP) are configured and enforced such that a transfer of the proof value to another recipient unit (22, 63) is prevented.

13. Access management unit configured to perform the method according to any of claims 1-10.

14. A computer program product directly loadable into the internal memory of at least on one digital computer, comprising software code portions for performing the steps of claims 1-10 when said product is run on said at least one digital computer.
